(19)

Europäisches
Patentamt

European
Patent Office

Office européen
des brevets

(11) **EP 4 357 124 A1**

(12) **EUROPEAN PATENT APPLICATION**
published in accordance with Art. 153(4) EPC

(43) Date of publication:
**24.04.2024 Bulletin 2024/17**

(21) Application number: **22828277.8**

(22) Date of filing: **14.06.2022**

(51) International Patent Classification (IPC):
*B32B 5/02* (2006.01)      *B32B 5/18* (2006.01)
*B32B 5/26* (2006.01)      *B32B 5/28* (2006.01)
*D04H 1/413* (2012.01)     *D04H 1/4209* (2012.01)
*H01M 10/625* (2014.01)    *H01M 10/6555* (2014.01)
*H01M 10/658* (2014.01)    *H01M 50/204* (2021.01)
*H01M 50/249* (2021.01)    *H01M 50/293* (2021.01)

(52) Cooperative Patent Classification (CPC):
B32B 5/02; B32B 5/18; B32B 5/26; B32B 5/28;
D04H 1/413; D04H 1/4209; H01M 10/625;
H01M 10/6555; H01M 10/658; H01M 50/204;
H01M 50/249; H01M 50/293; Y02E 60/10

(86) International application number:
**PCT/JP2022/023819**

(87) International publication number:
**WO 2022/270360 (29.12.2022 Gazette 2022/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.06.2021  JP 2021105144
26.11.2021  JP 2021192219**

(71) Applicant: **Denka Company Limited
Tokyo 103-8338 (JP)**

(72) Inventors:
• **MIZUTA, Kohei
  Tokyo 103-8338 (JP)**
• **SATO, Taiga
  Tokyo 103-8338 (JP)**
• **TABARA, Kazuto
  Tokyo 103-8338 (JP)**

(74) Representative: **Gulde & Partner
Patent- und Rechtsanwaltskanzlei mbB
Wallstraße 58/59
10179 Berlin (DE)**

(54) **FIRE SPREAD PREVENTION MATERIAL, METHOD FOR PRODUCING SAME, LAMINATE,
ASSEMBLED BATTERY, AND AUTOMOBILE**

(57)     A fire spread prevention material 10 having a multilayer configuration, including at least a layer A containing an inorganic fiber base material and sodium silicate impregnated into the inorganic fiber base material and a layer B containing an inorganic fiber and having a porous structure, in which the inorganic fiber base material includes an inorganic fiber and an organic binder, a content of the organic binder is 5 to 20 mass% based on a total mass of the inorganic fiber base material, and a $SiO_2/Na_2O$ mole ratio of the sodium silicate is less than 3.1.

*Fig.2*

**Description**

**Technical Field**

The present disclosure relates to a fire spread prevention material, a method for producing the same, a laminate, an assembled battery, and an automobile.

**Background Art**

As the electrification of automobiles becomes widespread, development of assembled batteries for automobiles and cells that are used therein is underway. Among assembled batteries for automobiles, particularly for assembled batteries in which a lithium ion battery (LiB) cell having a high energy density is used, since there is a risk of the occurrence of abnormality such as thermal runaway, development of techniques for enhancing the safety of cells is underway.

For example, in Patent Literature 1, a heat-absorbing sheet, which is used to avoid an abrupt increase in temperature due to an internal short-circuit or the like and a thermal runaway state of a lithium ion battery, has been proposed. In addition, Patent Literature 2 describes, as a technique for suppressing a chain reaction attributed to the occurrence of a thermal runaway state, a structure in which a thermal runaway prevention wall made of heat-insulating plastic is provided between secondary batteries adjacent to each other to prevent thermal runaway from inducing thermal runaway in other secondary batteries.

**Citation List**

**Patent Literature**

[Patent Literature 1] Japanese Unexamined Patent Publication No. 2010-53196
[Patent Literature 2] Japanese Patent No. 4958409

**Summary of Invention**

**Technical Problem**

However, the heat-absorbing sheet of Patent Literature 1 cannot be said to have sufficient heat insulating properties and fire spread prevention properties at all times. In addition, regarding the thermal runaway prevention wall in Patent Literature 2, a secondary battery and a heat conduction tube are integrally molded, the configuration is complex and unique, and fire spread to the plastic prevention wall itself is not taken into account.

In addition, depending on places where a fire spread prevention material is disposed, there are cases where the fire spread prevention material needs to be shaped to follow the shape of an installation place (for example, an uneven shape).

Therefore, one aspect of the present disclosure has an objective of providing a fire spread prevention material being excellent in terms of heat insulating properties and fire spread prevention properties. In addition, another aspect of the present disclosure has an objective of providing a fire spread prevention material processed into a predetermined shape and a method for producing the same. In addition, still another aspect of the present disclosure has an objective of providing a laminate that can be used as the fire spread prevention material. In addition, far still another aspect of the present disclosure has an objective of providing an assembled battery in which the fire spread prevention material is used and an automobile including the assembled battery.

**Solution to Problem**

Several aspects of the present disclosure provide [1] to [20] to be described below.

[1] A fire spread prevention material having a multilayer configuration, including at least a layer A containing an inorganic fiber base material and sodium silicate impregnated into the inorganic fiber base material and a layer B containing an inorganic fiber and having a porous structure, in which the inorganic fiber base material includes an inorganic fiber and an organic binder, a content of the organic binder is 5 to 20 mass% based on a total mass of the inorganic fiber base material, and a $SiO_2/Na_2O$ mole ratio of the sodium silicate is less than 3.1.

[2] The fire spread prevention material according to [1], in which a three-point bending strength that is measured according to JIS K 7171 is 0.5 MPa or higher.

[3] The fire spread prevention material according to [1] or [2], in which, when the fire spread prevention material has been heated at 650°C for 120 seconds from one end in a lamination direction, a surface temperature of the fire spread prevention material at the other end is 150°C or lower.

[4] The fire spread prevention material according to any one of [1] to [3], in which, when the fire spread prevention material has been heated at 650°C for 120 seconds from one end in a lamination direction, an expansion ratio of the layer A in the lamination direction is 90% or more.

[5] The fire spread prevention material according to any one of [1] to [4], in which a total thickness is 5.0 mm or less, and an apparent density is 1.0 g/cm$^3$ or less.

[6] The fire spread prevention material according to any one of [1] to [5], in which a content of the sodium silicate is 60 mass% or more based on a total mass of the layer A.

[7] The fire spread prevention material according to any one of [1] to [6], in which a thickness of the layer A is 0.2 to 3.0 mm.

[8] The fire spread prevention material according to any one of [1] to [7], in which the inorganic fiber base material is made of a wet-formed sheet including an inorganic fiber and an organic binder.

[9] The fire spread prevention material according to any one of [1] to [8], in which the organic binder contains at least one resin selected from the group consisting of an acrylic resin, a polyvinyl alcohol-based resin and an epoxy resin.

[10] The fire spread prevention material according to any one of [1] to [9], in which the inorganic fiber included in the layer B contains at least one compound selected from the group consisting of silica and alumina.

[11] The fire spread prevention material according to any one of [1] to [10], in which the layer B further includes an inorganic particle.

[12] The fire spread prevention material according to any one of [1] to [11], in which a total amount of the inorganic fiber and the inorganic particle included in the layer B is 40 to 95 mass% based on a total mass of the layer B.

[13] The fire spread prevention material according to any one of [1] to [12], in which the fire spread prevention material has a multilayer configuration in which a first layer, a second layer and a third layer are arranged in this order, the first layer and the third layer are the layer B, and the second layer is the layer A.

[14] The fire spread prevention material according to any one of [1] to [13], which is processed into a predetermined shape.

[15] The fire spread prevention material according to any one of [1] to [14], which is used in an assembled battery including two or more cells and a package accommodating the cells, by being disposed between the cells and/or between the cell and the package.

[16] A method for producing a fire spread prevention material including a step (a) of impregnating an inorganic fiber base material with an aqueous solution containing sodium silicate having a SiO$_2$/Na$_2$O mole ratio of less than 3.1, a step (b) of disposing a base material including an inorganic fiber and having a porous structure on the inorganic fiber base material impregnated with the aqueous solution to obtain a laminate containing the aqueous solution, and a step (c) of drying the laminate, in which the inorganic fiber base material includes an inorganic fiber and an organic binder, and a content of the organic binder is 5 to 20 mass% based on a total mass of the inorganic fiber base material.

[17] The method for producing a fire spread prevention material according to [16], in which, in the step (c), the laminate is processed into a predetermined shape, and then the laminate is dried with the shape unchanged.

[18] An assembled battery including two or more cells, a package accommodating the cells and the fire spread prevention material according to any one of [1] to [15] disposed between the cells and/or between the cell and the package.

[19] An automobile including the assembled battery according to [18].

[20] A laminate including at least a layer A containing an inorganic fiber base material and sodium silicate impregnated into the inorganic fiber base material and a layer B containing an inorganic fiber and having a porous structure, in which the inorganic fiber base material includes an inorganic fiber and an organic binder, a content of the organic binder is 5 to 20 mass% based on a total mass of the inorganic fiber base material, and a SiO$_2$/Na$_2$O mole ratio of the sodium silicate is less than 3.1.

**Advantageous Effects of Invention**

According to the present disclosure, it is possible to provide a fire spread prevention material being excellent in terms of heat insulating properties and fire spread prevention properties. In addition, according to the present disclosure, it is also possible to provide a fire spread prevention material processed into a predetermined shape and a method for producing the same. In addition, according to the present disclosure, it is also possible to provide a laminate that can be used as the fire spread prevention material. In addition, according to the present disclosure, it is also possible to provide an assembled battery in which the fire spread prevention material is used and an automobile including the assembled battery.

**Brief Description of Drawings**

FIG. 1 is a schematic cross-sectional view showing a layer A of a fire spread prevention material of an embodiment.
FIG. 2 is a schematic cross-sectional view showing a fire spread prevention material of an embodiment.
FIG. 3 is a partial enlarged view of the fire spread prevention material of FIG. 2.
FIG. 4 is a schematic cross-sectional view for describing a method for producing a fire spread prevention material of an embodiment.

**Description of Embodiments**

In the present specification, numerical ranges expressed using "to" indicate ranges including numerical values described before and after "to" as the minimum value and the maximum value, respectively. In addition, the units of the numerical values described before and after "to" are the same unless specifically and clearly otherwise described. In numerical ranges expressed stepwise in the present specification, the upper limit value or the lower limit value of a numerical range at a certain step may be replaced by the upper limit value or the lower limit value of a numerical range at another step. In addition, in a numerical range described in the present specification, the upper limit value or the lower limit value of the numerical range may be replaced by a value described in examples. In addition, individually described upper limit values and lower limit values can be arbitrarily combined together.

Hereinafter, embodiments of the present disclosure will be described in detail with reference to drawings depending on cases. However, the present disclosure is not limited to the following embodiments.

A fire spread prevention material of an embodiment is a fire spread prevention material having a multilayer configuration. The fire spread prevention material includes at least a layer A and a layer B. The layer A contains an inorganic fiber base material and sodium silicate impregnated into the inorganic fiber base material. The inorganic fiber base material includes an inorganic fiber and an organic binder. The content of the organic binder is 5 to 20 mass% based on the total mass of the inorganic fiber base material, and the $SiO_2/Na_2O$ mole ratio of the sodium silicate is less than 3.1. The layer B contains an inorganic fiber and has a porous structure.

The fire spread prevention material having the above-described characteristics is excellent in terms of heat insulating properties and fire spread prevention properties. Whether a fire spread prevention material has excellent fire spread prevention properties can be evaluated by, for example, the surface temperature (surface temperature when 120 seconds has elapsed) of the fire spread prevention material at one end when the fire spread prevention material has been heated at 650°C for 120 seconds from the other end in the lamination direction. The surface temperature of the fire spread prevention material at one end when the fire spread prevention material has been heated at 650°C for 120 seconds from the other end in the lamination direction can be set to, for example, 150°C or lower. The surface temperature can also be set to 140°C or lower or 120°C or lower. The surface temperature may be room temperature (for example, 25°C) or higher. That is, the surface temperature may be room temperature (for example, 25°C) to 150°C.

The aforementioned fire spread prevention material is, for example, a fire spread prevention material for an assembled battery. The fire spread prevention material for an assembled battery is used, for example, in an assembled battery (particularly, a lithium ion battery) including two or more cells and a package accommodating the cells, by being disposed between the cells and/or between the cell and the package. Here, the assembled battery refers to, for example, a battery in which a plurality of cells of the same type is packed.

The fire spread prevention material is, for example, a separator that is used in an assembled battery including two or more cells. When an assembled battery includes the fire spread prevention material as a separator, heat conduction between the cells is suppressed at normal times, and the spread of heat to an adjacent cell is suppressed at abnormal times. Therefore, when the fire spread prevention material is used in, for example, an assembled battery for an automobile, it is possible to enhance the safety of the assembled battery, ensure the evacuation time of a user at abnormal times and suppress damage to the minimum.

The fire spread prevention material may be a member that is disposed between the cell and the package so as to cover a convex projection such as a safety valve in the cell. In this case, there are cases where the fire spread prevention material is regarded as a part of the package.

Incidentally, for the assembled battery for an automobile, there is a demand not only for the guaranteed safety of the cell but also for additional weight reduction from the viewpoint of the driving distances. In this regard, the aforementioned fire spread prevention material is likely to obtain high fire spread prevention properties even in a case where a thin film is used as the layer A. Therefore, according to the fire spread prevention material, it is possible to satisfy the demand for weight reduction while maintaining high fire spread prevention properties.

In addition, depending on places where the fire spread prevention material is disposed, there are cases where the fire spread prevention material needs to be shaped to follow the shape of an installation place (for example, an uneven shape). Regarding this point, the fire spread prevention material can have a predetermined shape processed to follow the shape of an installation place. This is attributed to the properties of the fire spread prevention material, that is, flexibility enabling shape processing in a state where the amount of moisture in the layer A is large, which arises from the fact that the sodium silicate configuring the layer A is water soluble and the inorganic fiber base material is flexible, (that is, excellent shape processability) and a high strength enabling the shape before drying to be maintained even after drying.

Hereinafter, first of all, the layer A and the layer B configuring the fire spread prevention material will be described.

(Layer A)

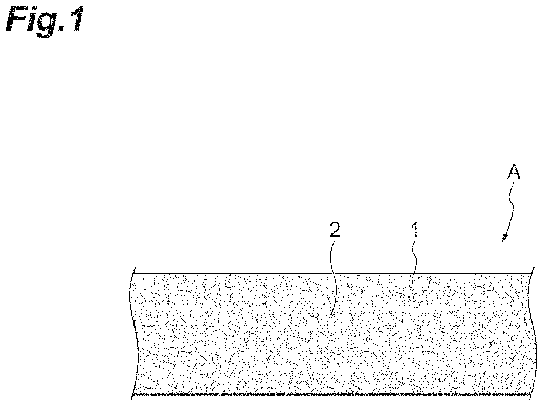

As shown in FIG. 1, the layer A is a layer including an inorganic fiber base material 1 and low-$SiO_2$ sodium silicate 2 impregnated into the inorganic fiber base material 1. Here, "low-$SiO_2$ sodium silicate" means sodium silicate having a $SiO_2/Na_2O$ mole ratio of less than 3.1. The low-$SiO_2$ sodium silicate is represented by, for example, $Na_2O$-$nSiO_2$-$mH_2O$ (n indicates a positive number less than 3.1, and m indicates zero or a positive number). In FIG. 1, A indicates the layer A.

The $SiO_2/Na_2O$ mole ratio (n in the above-described formula) of the low-$SiO_2$ sodium silicate is less than 3.1, and from the viewpoint of obtaining superior fire spread prevention properties, it may be 2.7 or less or 2.3 or less. The $SiO_2/Na_2O$ mole ratio of the low-$SiO_2$ sodium silicate may be 1.0 or more, 1.5 or more or 2.0 or more from the viewpoint of the productivity of the fire spread prevention material. The $SiO_2/Na_2O$ mole ratio of the low-$SiO_2$ sodium silicate may be 1.0 or more and less than 3.1, 1.5 to 2.7 or 2.0 to 2.3 from these viewpoints.

The content of the low-$SiO_2$ sodium silicate may be 60 mass% or more, 70 mass% or more or 75 mass% or more based on the total mass of the layer A from the viewpoint of obtaining superior fire spread prevention properties. The content of the low-$SiO_2$ sodium silicate may be 98 mass% or less, 95 mass% or less or 90 mass% or less based on the total mass of the layer A from the viewpoint of obtaining a fire spread prevention material with a lighter weight. The content of the low-$SiO_2$ sodium silicate may be 60 to 98 mass%, 70 to 95 mass% or 75 to 90 mass% based on the total mass of the layer A from these viewpoints.

The inorganic fiber base material 1 is a base material composed of inorganic fibers as a main component (for example, a sheet), and a plurality of voids (pores) is formed between the inorganic fibers. That is, the inorganic fiber base material 1 has a porous structure. Therefore, the layer A shown in FIG. 1 can be formed by impregnating the inorganic fiber base material 1 with an aqueous solution of the low-$SiO_2$ sodium silicate to fill the voids in the inorganic fiber base material 1 with the low-$SiO_2$ sodium silicate and then drying the low-$SiO_2$ sodium silicate.

In the present specification, the inorganic fiber is a fibrous object having a length of 1 mm or longer and an aspect ratio (length/width) of 100 or more and is differentiated from the inorganic particles of precipitated silica (non-fibrous object). The length of the inorganic fiber (fiber length) is, for example, 3 to 12 mm. The width of the inorganic fiber (fiber diameter) is, for example, 3 to 10 $\mu$m. In a case where the inorganic fibers configuring the inorganic fiber base material 1 have the above-described fiber lengths and fiber diameters, the inorganic fibers tend to be excellent in terms of the shape processability before drying. The average fiber diameter of the inorganic fibers may be, for example, 5 to 10 $\mu$m from the same viewpoint. Here, the average fiber diameter is a value that is measured by microscopic observation with a scanning electron microscope (SEM), an optical microscope or the like.

Examples of the configuration material of the inorganic fibers configuring the inorganic fiber base material 1 include silica ($SiO_2$), alumina ($Al_2O_3$), carbon, silicon carbide (SiC) and the like. In a case where the inorganic fibers contain at least one compound selected from the group consisting of silica ($SiO_2$) and alumina ($Al_2O_3$) among these, there is a tendency that higher heat insulating properties and fire spread prevention properties can be obtained, and there is a tendency that the shape processability before drying is excellent. Examples of such inorganic fibers include alumina-silica fibers, glass fibers, silica fibers, basalt fibers, rock wool and the like. In a case where the inorganic fibers are alumina-silica fibers or silica fibers among these, there is a tendency that higher heat insulating properties and fire spread prevention properties can be obtained, and there is a tendency that the shape processability before drying is excellent. Inorganic fibers of one kind or inorganic fibers of a plurality of kinds may configure the inorganic fiber base material 1.

The content of the inorganic fibers is, for example, 1 mass% or more based on the total mass of the layer A and may be 5 mass% or more, 8 mass% or more or 10 mass% or more from the viewpoint of ensuring superior fire spread prevention properties. The content of the inorganic fibers may be 40 mass% or less, 35 mass% or less, 30 mass% or less or 20 mass% or less based on the total mass of the layer A from the viewpoint of the productivity of the fire spread prevention material. The content of the inorganic fibers may be 1 to 40 mass%, 1 to 35 mass%, 5 to 30 mass%, 8 to 30 mass% or 10 to 20 mass% or less based on the total mass of the layer A from these viewpoints.

While not shown in the drawing, the inorganic fiber base material 1 further includes an organic binder. The organic binder bonds, for example, the inorganic fibers together. The organic binder may be a resin having a glass transition temperature of room temperature (for example, 25°C) or lower or may be a water-soluble resin. Examples of the organic binder include an acrylic resin, a polyvinyl alcohol-based resin (vinylon or the like), an epoxy resin, cellulose such as cellulose microfibrils, a polyvinyl chloride resin and the like. Among these, at least one resin selected from the group consisting of an acrylic resin, a polyvinyl alcohol-based resin and an epoxy resin may be used from the viewpoint of obtaining higher heat insulating properties and fire spread prevention properties. Here, the acrylic resin is a polymer containing at least one selected from the group consisting of acrylic acid, derivatives thereof (acrylic acid esters and the like), methacrylic acid and derivatives thereof (methacrylic acid esters and the like) as a monomer unit. In addition, the cellulose microfibril refers to a microfibrillated cellulose fiber. One organic binder or a plurality of organic binders may be included in the inorganic fiber base material 1.

The content of the organic binder is 5 to 20 mass% based on the total mass of the inorganic fiber base material. Ordinarily, organic binders thermally decompose while generating heat, and the content of the organic binder is thus considered to be preferably as small as possible. However, according to the present inventors' studies, surprisingly, it has been clarified that, when the content of the organic binder is 5 mass% or more, the volume of the layer A expands under a high-temperature environment, and improvement in a heat insulating effect accompanied by the volume expansion makes it possible to obtain excellent fire spread prevention properties. The content of the organic binder may be 6 mass% or more or 7 mass% or more based on the total mass of the inorganic fiber base material from the viewpoint of making it easy for the volume expansion of the layer A to occur when the fire spread prevention material has been heated and making it easy to obtain superior fire spread prevention properties. The content of the organic binder may be 18 mass% or less or 15 mass% or less based on the total mass of the inorganic fiber base material from the viewpoint of making it easy to obtain higher fire spread prevention properties. The content of the organic binder may be 6 to 18 mass% or 7 to 15 mass% based on the total mass of the inorganic fiber base material from these viewpoints.

As the inorganic fiber base material 1, it is possible to use, for example, a base material having excellent properties of holding the low-$SiO_2$ sodium silicate. The inorganic fiber base material 1 may be a nonwoven fabric from the viewpoint of the properties of holding the low-$SiO_2$ sodium silicate that has infiltrated into the base material or may be a sheet that is formed by a wet-type forming method (wet-formed sheet) from the viewpoint of the above-described holding properties being superior. In the wet-type forming method, a dispersion liquid obtained by dispersing materials (the inorganic fibers, the organic binder and the like) in water is formed into a papermaking screen, and the papermaking screen is dried, thereby producing the inorganic fiber base material (non-woven fabric). According to this method, it is possible to easily obtain an inorganic fiber base material (non-woven fabric) in which voids are substantially uniformly dispersed and the organic binder is substantially uniformly dispersed. Therefore, the wet-formed sheet tends to have substantially uniformly dispersed voids and tends to have excellent properties of holding the low-$SiO_2$ sodium silicate. In addition, according to the wet-formed sheet, the organic binder is substantially uniformly dispersed in the base material, which makes it easy for the volume expansion of the layer A to uniformly occur when the fire spread prevention material has been heated and makes it easy to obtain superior fire spread prevention properties. The apparent density of the inorganic fiber base material 1 may be, for example, 1000 kg/m$^3$ or lower or 800 kg/m$^3$ or lower. The apparent density of the inorganic fiber base material 1 may be, for example, 80 to 200 kg/m$^3$. The basis weight of the inorganic fiber base material 1 may be, for example, 100 to 170 g/m$^2$ in a case where the thickness is 1.0 mm.

The thickness of the inorganic fiber base material 1 is, for example, 0.2 to 3.0 mm. The thickness of the inorganic fiber base material 1 may be made to be the same as the thickness of the layer A. That is, the layer A may be a layer composed of the inorganic fiber base material 1 and the components (low-$SiO_2$ sodium silicate 2 and the like) that are included in the inorganic fiber base material 1. The layer A may be composed of a plurality of fiber base materials impregnated with low-$SiO_2$ sodium silicate (for example, a laminate of a plurality of fiber base materials impregnated with low-$SiO_2$ sodium silicate).

The thickness of the layer A may be 0.2 mm or more or may be 0.5 mm or more or 1 mm or more from the viewpoint of ensuring superior fire spread prevention properties. The thickness of the layer A may be 3.0 mm or less or may be 2.5 mm or less or 2.0 mm or less from the viewpoint of obtaining a fire spread prevention material having a lighter weight. The thickness of the layer A may be 0.2 to 3.0 mm, 0.5 to 2.5 mm or 1.0 to 2.0 mm from these viewpoints. The thickness of the layer A can be rephrased by the length in the lamination direction of a region where the low-$SiO_2$ sodium silicate is present. The thickness of the layer A can be measured by, for example, a method in which the cross section of the fire spread prevention material is observed with a scanning electron microscope (SEM), the lengths in the lamination direction of regions where the low-$SiO_2$ sodium silicate is present are measured at randomly selected 10 places, and the average value thereof is regarded as the thickness of the layer A. In a case where there is a plurality of the layers A, the thickness of each layer A may be within the above-described range or the total of the thicknesses of all of the layers A may be within the above-described range.

As described above, the volume of the layer A expands under a high-temperature environment. There is a tendency that, as the expansion ratio of the layer A in the lamination direction when the fire spread prevention material has been heated at 650°C for 120 seconds from one end in the lamination direction (hereinafter, simply referred to as "expansion ratio") becomes higher, the fire spread prevention material exhibits superior fire spread prevention properties. The expansion ratio of the layer A may be 90% or more or may be 95% or more, 100% or more, 150% or more or 200% or more from the viewpoint of obtaining superior fire spread prevention properties. The expansion ratio of the layer A may be 800% or less, may be 700% or less or 600% or less or may be 200% or less, 150% or less or 130% or less from the viewpoint of suppressing a decrease in the strengths of generated air bubbles. The expansion ratio of the layer A may be 90 to 800%, 95 to 800%, 100 to 800%, 150 to 700% or 200 to 600% or may be 90 to 200%, 95 to 150% or 100 to 130% from these viewpoints. The expansion ratio of the layer A can be adjusted by changing the amount of the low-$SiO_2$ sodium silicate and the $SiO_2/Na_2O$ mole ratio in the layer A, the kind and amount of the organic binder in the layer A, the kind of the layer B (for example, the kind, amount and the like of an inorganic material in the layer B), the layer configuration of the fire spread prevention material or the like. The expansion ratio is calculated by the following formula.

Formula: expansion ratio (%) = [amount of layer A expanded in lamination direction (thickness direction)]/[length of layer A in lamination direction (thickness of layer A)] $\times$ 100

Here, the amount of the layer A expanded in the lamination direction is the amount of the thickness of the layer A changed by the heating of the fire spread prevention material under the above-described conditions ([thickness after heating] - [thickness before heating]). In a case where there is a plurality of the layers A, the expansion ratio of each layer A may be within the above-described range or the total of the expansion ratios of all of the layers A may be within the above-described range.

The layer A may be a layer that absorbs heat within a temperature range of 100°C to 300°C. Heat absorption by the layer A can be confirmed by, for example, thermogravimetry-differential thermal analysis (TG-DTA) measurement. The heat absorption by the layer A occurs due to an endothermic reaction within a temperature range of 100°C to 300°C caused by water (for example, water molecules in the sodium silicate) that is contained in the layer A. Therefore, the amount of heat absorbed by the layer A can be adjusted with the amount of moisture that is contained in the layer A. The amount of moisture in the layer A can be confirmed from the rate of the mass reduced by heating (for example, the mass reduction rate at the time of heating the layer A from 100°C to 300°C at 50 °C/minute).

When an endothermic reaction occurs, the mass of the layer A reduces. For example, when the mass reduction rate at the time of heating the layer A from 100°C to 300°C at 50 °C/minute is 13 mass% or more, there is a tendency that the amount of heat absorbed by the layer A within a temperature range of 100°C to 300°C is large and superior heat insulating properties and fire spread prevention properties can be obtained. From such a viewpoint, the mass reduction rate at the time of heating the layer A from 100°C to 300°C at 50 °C/minute may be 15 mass% or more or 17 mass% or more. The mass reduction rate at the time of heating the layer A from 100°C to 300°C at 50 °C/minute may be 30 mass% or less or may be 28 mass% or less or 25 mass% or less from the viewpoint of improving water resistance. The mass reduction rate at the time of heating the layer A from 100°C to 300°C at 50 °C/minute may be 13 to 30 mass%, 15 to 28 mass% or 17 to 25 mass% from these viewpoints. The mass reduction rate is calculated by the following formula.

$$\text{Formula: mass reduction rate (mass\%)} = [\text{amount of mass of layer A reduced}]/[\text{mass of layer A at } 100°C] \times 100$$

Here, the amount of the mass of layer A reduced is the difference between the mass of the layer A at 100°C and the mass of the layer A at 300°C. In a case where there is a plurality of the layers A, the mass reduction rate of each layer A may be within the above-described range or the total of the mass reduction rates of all of the layers A may be within the above-described range.

(Layer B)

The layer B contains inorganic fibers and has a porous structure. Pore configuring the porous structure of the layer B are, for example, voids formed between the inorganic fibers by the entanglement of the plurality of inorganic fibers. When the fire spread prevention material includes such a layer B, it is possible to satisfy both improvement in heat insulating properties and the weight reduction of the fire spread prevention material. In addition, the layer B tends to be flexible compared with the layer A and easily transforms to follow the expansion and shrinkage of cells during charging and discharging. Therefore, when the layer B is disposed on the cell side in the layer configuration, it is also possible to reduce a mechanical load on the cells due to the expansion and shrinkage of the cells during charging and discharging.

Examples of the inorganic fibers that are contained in the layer B include the above-described inorganic fibers exemplified as the inorganic fibers configuring the inorganic fiber base material 1. Inorganic fibers of one kind or inorganic fibers of a plurality of kinds may be contained in the layer B. The inorganic fibers may contain at least one compound selected from the group consisting of silica ($SiO_2$) and alumina ($Al_2O_3$) or may be at least one selected from the group consisting of alumina-silica fibers and silica fibers from the viewpoint of obtaining higher fire spread prevention properties.

The content of the inorganic fibers in the layer B may be 20 mass% or more or may be 100 mass% or less based on the total mass of the layer B. The content of the inorganic fibers in a case where the layer B contains inorganic particles to be described below may be 20 mass% or more or may be 25 mass% or more or 30 mass% or more based on the total mass of the layer B from the viewpoint of improving the strength of the layer B. The content of the inorganic fibers in a case where the layer B contains inorganic particles to be described below may be 70 mass% or less or may be 60 mass% or less or 50 mass% or less based on the total mass of the layer B from the viewpoint of suppressing the density of the layer B. The content of the inorganic fibers in a case where the layer B contains inorganic particles to be described below may be 20 to 70 mass%, 25 to 60 mass% or 30 to 50 mass% based on the total mass of the layer B from these viewpoints.

The content of the inorganic fibers in a case where the layer B does not contain the inorganic particles may be 70 mass% or more or may be 85 mass% or more or 90 mass% or more based on the total mass of the layer B from the viewpoint of improving the strength of the layer B. The content of the inorganic fibers in a case where the layer B does not contain the inorganic particles may be 100 mass% or less or may be 98 mass% or less or 95 mass% or less based on the total mass of the layer B from the viewpoint of suppressing the density of the layer B. The content of the inorganic fibers in a case where the layer B does not contain the inorganic particles may be 70 to 100 mass%, 85 to 98 mass% or 90 to 95 mass% based on the total mass of the layer B from these viewpoints.

The layer B may further contain inorganic particles. Examples of the configuration material of the inorganic particles include silica, aluminum hydroxide, zinc oxide, magnesium carbonate, aluminum silicate and the like. In a case where the inorganic particles contain at least one compound selected from the group consisting of silica, aluminum hydroxide, zinc oxide and magnesium carbonate among these, there is a tendency that higher heat insulating properties and fire spread prevention properties can be obtained. Examples of the particles containing silica include precipitated silica, fumed silica, colloidal silica and the like. The precipitated silica is amorphous silica particles that are obtained by a precipitation method, which is one of wet-type methods, and has a porous structure.

The average particle diameter of the inorganic particles is, for example, 0.1 to 100 μm. Here, the average particle diameter of the inorganic particles is the value of the volume-cumulative particle diameter D50 that is measured with a laser diffraction-type particle size analyzer. The average particle diameter of the inorganic particles may be 0.5 μm or more or 1 μm or more from the viewpoint of the handleability. The average particle diameter of the inorganic particles may be 80 μm or less or 50 μm or less from the viewpoint of obtaining a more uniform distribution. The average particle diameter of the inorganic particles may be 10 to 80 μm or 15 to 50 μm from these viewpoints.

The content of the inorganic particles may be 20 mass% or more or may be 25 mass% or more or 30 mass% or more based on the total mass of the layer B from the viewpoint of enhancing the heat insulating properties of the layer B and obtaining superior fire spread prevention properties. The content of the inorganic particles may be 50 mass% or less or may be 45 mass% or less or 40 mass% or less based on the total mass of the layer B from the viewpoint of obtaining the layer B having a lighter weight. The content of the inorganic particles may be 20 to 50 mass%, 25 to 45 mass% or 30 to 40 mass% based on the total mass of the layer B from these viewpoints.

The total amount of the inorganic fibers and the inorganic particles that are contained in the layer B may be 40 mass% or more or may be 50 mass% or more or 60 mass% or more based on the total mass of the layer B from the viewpoint of further improving the fire spread prevention properties. The total amount of the inorganic fibers and the inorganic particles that are contained in the layer B may be 95 mass% or less or may be 90 mass% or less or 80 mass% or less based on the total mass of the layer B from the viewpoint of the productivity. The total amount of the inorganic fibers and the inorganic particles that are contained in the layer B may be 40 to 95 mass%, 50 to 90 mass% or 60 to 80 mass% based on the total mass of the layer B from these viewpoints.

The layer B may further contain an organic binder. The organic binder bonds, for example, the inorganic fibers together. Examples of the organic binder include the above-described organic binders exemplified as the organic binder that can be contained in the inorganic fiber base material 1. One organic binder or a plurality of organic binders may be contained in the layer B. The content of the organic binder may be 5 to 30 mass%, 7 to 20 mass% or 8 to 15 mass% based on the total mass of the layer B from the viewpoint of suppressing ignition under a high-temperature atmosphere.

The layer B may further contain a flocculant from the viewpoint of more effectively improving the content of the inorganic particles. Examples of the flocculant include polyamidine-based polymers. The content of the flocculant may be 0.1 to 5 mass%, 0.3 to 4 mass% or 0.5 to 3 mass% based on the total mass of the layer B from the viewpoint of suppressing the amount of the organic component.

The layer B may contain sodium silicate (sodium silicate other than the low-$SiO_2$ sodium silicate) or may not contain the sodium silicate. The content of the sodium silicate that is contained in the layer B may be, for example, 10 mass% or less or may be 5 mass% or less or 3 mass% or less based on the total mass of the layer B.

The layer B may be composed of, for example, a base material containing inorganic fibers and having a porous structure (inorganic fiber base material). In this case, "the layer B" in the above description may be rephrased by "the inorganic fiber base material configuring the layer B." The inorganic fiber base material is, for example, an inorganic fiber sheet and may be a wet-formed sheet. Since the wet-formed sheet tends to have substantially uniformly dispersed voids, the use of the wet-formed sheet makes it possible to obtain an effect of making it easy to prevent the infiltration of the low-$SiO_2$ sodium silicate from the adjacent layer A at the time of producing the fire spread prevention material and making it easy to accelerate curing by drying at the time of forming the layer A. Therefore, in a case where the layer B is composed of a wet-formed sheet, there is a tendency that the fire spread prevention properties are superior. The wet-formed sheet may be, for example, a wet-formed sheet that is obtained by forming a dispersion liquid obtained by dispersing the inorganic fibers, the organic binder and (arbitrarily, the inorganic particles and the flocculant) in water into a papermaking screen and drying the papermaking screen. The density of the layer B may be, for example, 200 to 500 kg/m$^3$. The basis weight of the layer B may be, for example, 100 to 250 g/m$^2$ in a case where the thickness is 1.0 mm.

The thickness of the layer B may be 0.2 mm or more or may be 0.5 mm or more or 0.8 mm or more from the viewpoint of superior heat insulating properties and suppressing the thermal deterioration of the layer A. The thickness of the layer B may be 2.0 mm or less or may be 1.5 mm or less or 1.3 mm or less from the viewpoint of suppressing the total thickness. The thickness of the layer B may be 0.2 to 2.0 mm, 0.5 to 1.5 mm or 0.8 to 1.3 mm from these viewpoints.

Hitherto, the layer A and the layer B have been described, but the fire spread prevention material may be configured to have two layer or may be configured to have three or more layer as long as the layer A and the layer B are included. The fire spread prevention material may be composed of one or a plurality of the layers A or one or a plurality of the layers B and may further include a layer other than the layer A and the layer B. The plurality of layers A may be the same as or different from each other. The plurality of layers B may be the same as or different from each other. In a case where the fire spread prevention material used by being disposed between the cells of an assembled battery including two or more cells, the fire spread prevention material may have a symmetrical structure.

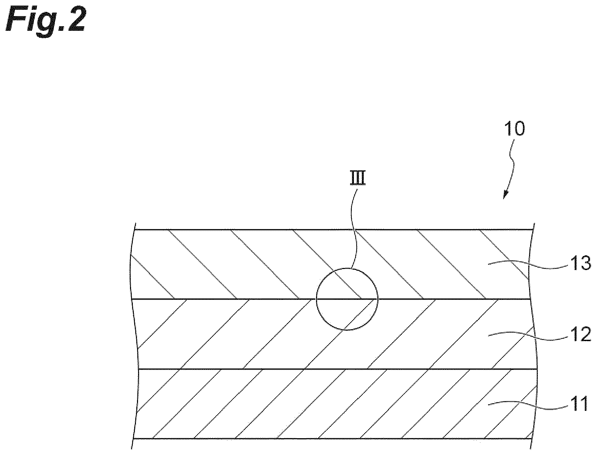

The fire spread prevention material may be a fire spread prevention material 10 having a multilayer configuration in which the layer B (first layer 11), the layer A (second layer 12) and the layer B (third layer 13) are arranged in this order as shown in FIG. 2 from the viewpoint of easily reducing the mechanical load on the cells due to the expansion and shrinkage of the cells during charging and discharging and suppressing the deterioration of the layer A. In this case, the layer B configuring the first layer 11 and the layer B configuring the third layer 13 may be the same as or different from each other. From the above-described viewpoint, at least one of the outermost layers (layers that are positioned at one end and the other end in the lamination direction) may be the layer B, or both of the outermost layers (layers that are positioned at one end and the other end in the lamination direction) may be the layer B.

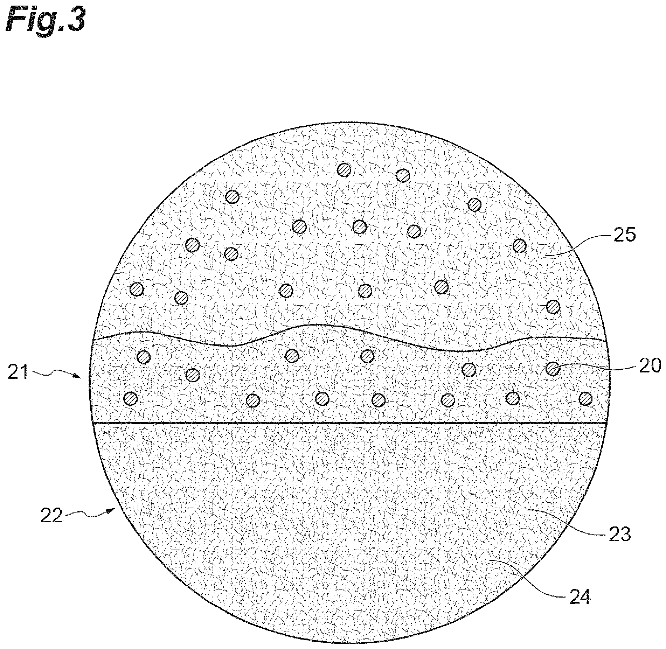

FIG. 3 is a partial enlarged view showing a region indicated by III in FIG. 2 in an enlarged manner. The layer A (second layer 12) in FIG. 2 has a first region 21 including inorganic particles 20 and a second region 22 not including the inorganic particles 20 as shown in FIG. 3. The first region 21 is, for example, a region formed by impregnating an inorganic fiber base material 23 with low-$SiO_2$ sodium silicate 24. The second region 22 is, for example, a region formed by impregnating a part of an inorganic fiber sheet 25 configuring the layer B (first layer 11) with low-$SiO_2$ sodium silicate 24. As described above, the layer A may have the first region including the inorganic particles and the second region not including the inorganic particles, and the layer A may be formed in a part of the inorganic fiber sheet configuring the layer B. The first region may be formed on the third layer side.

The fire spread prevention material has, for example, insulating properties. Here, having insulating properties means that the electrical resistivity that is measured by volume resistivity measurement is $10^8$ Ω·cm or more.

The fire spread prevention material may have a sheet shape (for example, a flat plate shape) or may be processed into a predetermined shape. The predetermined shape may be set as appropriate depending on the shape of the installation place of the fire spread prevention material. The predetermined shape may be, for example, a shape that follows the shape of the installation place of the fire spread prevention material (the surface shape of a member that is disposed opposite to the fire spread prevention material or the like). Specific examples of the shape include a sheet shape having projections and recesses on the surface, a sheet shape having a bent part at an angle of 90° or more and the like. The shapes of the projection and the recess (the shapes of the projection part and the recess part) are not particularly limited and may be a shape with a rectangular cross section, a shape with a V-like cross section, a shape with a U-like cross section or the like. The fire spread prevention material processed into the predetermined shape can be a fire spread prevention material having no layer separation, layer fracture or the like by being produced by a production method to be described below. The fire spread prevention material having neither layer separation nor layer fracture can be confirmed by, for example, observing the cross section of the fire spread prevention material with a scanning electron microscope (SEM).

The fire spread prevention material processed into the predetermined shape holds the shape. The fire spread prevention material being capable of holding the predetermined shape can be quantified by the three-point bending strength of the fire spread prevention material. Specifically, when the three-point bending strength of the fire spread prevention material that is measured according to JIS K 7171 is 0.5 MPa or higher, the fire spread prevention material can be said to have a sufficient strength to hold the predetermined shape. The three-point bending strength may be, for example, 0.8 MPa or higher or 1.0 MPa or higher. The three-point bending strength may be 5.0 MPa or lower or may be 4.0 MPa or lower or 3.0 MPa or lower from the viewpoint of the flexibility. The three-point bending strength may be 0.5 to 5.0 MPa, 0.8 to 4.0 MPa or 1.0 to 3.0 MPa from these viewpoints.

The total thickness (thickness in the lamination direction) of the fire spread prevention material may be 5.0 mm or less or may be 4.0 mm or less or 3.0 mm or less from the viewpoint of suppressing a space that becomes necessary for the fire spread prevention material. The total thickness of the fire spread prevention material may be 1.0 mm or more or may be 1.2 mm or more or 1.5 mm or more from the viewpoint of obtaining higher fire spread prevention properties. The total thickness of the fire spread prevention material may be 1.0 to 5.0 mm or may be 1.2 to 4.0 mm or 1.5 to 3.0 mm from these viewpoints.

As the apparent density of the fire spread prevention material becomes lower, additional weight reduction becomes possible. The apparent density of the fire spread prevention material can be set to, for example, 1.0 $g/cm^3$ or lower and can also be set to 0.8 $g/cm^3$ or lower or 0.7 $g/cm^3$ or lower. The lower limit of the apparent density of the fire spread prevention material is, for example, 0.2 $g/cm^3$. The apparent density of the fire spread prevention material may be 0.2 to 1.0 $g/cm^3$, 0.2 to 0.8 $g/cm^3$ or 0.2 to 0.7 $g/cm^3$. The apparent density of the fire spread prevention material can be adjusted by changing the amount of the low-$SiO_2$ sodium silicate and the $SiO_2/Na_2O$ mole ratio in the layer A, the kind of the layer B (for example, the kind, amount and the like of the inorganic material in the layer B), the layer configuration of the fire spread prevention material or the like.

From the above-described viewpoint, the fire spread prevention material may have a total thickness of 5.0 mm or less and an apparent density of 1.0 $g/cm^3$ or lower.

As the thermal conductivity of the fire spread prevention material becomes lower, the insulating properties become superior. The thermal conductivity of the fire spread prevention material can also be set to, for example, 0.15 W/mK or lower, 0.13 W/mK or lower or 0.1 W/mK or lower. The lower limit of the thermal conductivity of the fire spread prevention material is, for example, 0.03 W/mK. The thermal conductivity of the fire spread prevention material may be 0.03 to 0.15 W/mK, 0.03 to 0.13 W/mK or 0.03 to 0.1 W/mK. The thermal conductivity of the fire spread prevention material can be adjusted by changing the amount of the low-$SiO_2$ sodium silicate and the $SiO_2/Na_2O$ mole ratio in the layer A, the kind of the layer B (for example, the kind, amount and the like of the inorganic material in the layer B), the layer configuration of the fire spread prevention material or the like.

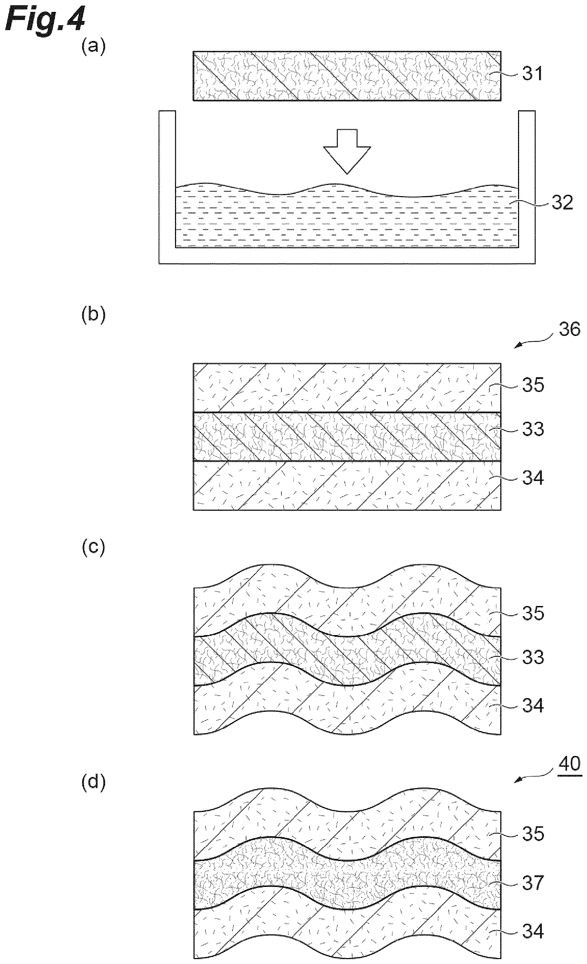

The fire spread prevention material described above may be produced by forming the layer B on the layer A or may be produced by forming the layer A on the layer B. An example of a method for producing the fire spread prevention material includes a step (a) of impregnating an inorganic fiber base material with an aqueous solution containing low-$SiO_2$ sodium silicate (sodium silicate having a $SiO_2/Na_2O$ mole ratio of less than 3.1), a step (b) of disposing a base material including inorganic fibers and having a porous structure on the inorganic fiber base material impregnated with the aqueous solution to obtain a laminate containing the aqueous solution, and a step (c) of drying the laminate. Hereinafter, an example of the method for producing the fire spread prevention material will be described with reference to FIG. 4.

FIG 4(a) is a schematic cross-sectional view for describing the step (a). As shown in FIG. 4(a), in the step (a), an inorganic fiber base material 31 may be impregnated with an aqueous solution 32 containing low-$SiO_2$ sodium silicate by immersing the inorganic fiber base material 31 in the aqueous solution 32 containing low-$SiO_2$ sodium silicate. This makes a base material 33 containing the inorganic fiber base material 31 and the aqueous solution 32 impregnated into the inorganic fiber base material 31 (hereinafter, referred to as "aqueous solution-impregnated base material 33") obtained. As the inorganic fiber base material 31, it is possible to use an inorganic fiber base material described as the inorganic fiber base material 1 configuring the layer A of the fire spread prevention material of the above-described embodiment. As the aqueous solution containing low-$SiO_2$ sodium silicate, it is possible to use, for example, sodium silicate No. 1, sodium silicate No. 2 or the like that is regulated by JIS K 1408. The impregnation conditions of the inorganic fiber base material 31 may be adjusted as appropriate depending on the kind of the inorganic fiber base material 31.

FIG. 4(b) is a view showing an example of the step (b). As shown in FIG. 4(b), in the step (b), a laminate 36 containing the aqueous solution 32 may be obtained by disposing base materials containing inorganic fibers and having a porous structure (a first base material 34 and a second base material 35) on both main surfaces of the aqueous solution-impregnated base material 33.

The laminate 36 that is obtained in the step (b) is flexible enough for shape processing. The three-point bending strength of the laminate 36 that is measured according to JIS K 7171, that is, the three-point strength of the laminate before drying may be 0.4 MPa or lower (for example, 0.01 to 0.4 MPa). The laminate 36 shown in FIG. 4(b) is a layer having a three-layer configuration, but the layer configuration of the laminate is not particularly limited. For example, a laminate having a two-layer configuration may also be obtained by disposing a base material containing inorganic fibers and having a porous structure on one main surface of the aqueous solution-impregnated base material 33.

As the base material containing inorganic fibers and having a porous structure, it is possible to use the base material described as the inorganic fiber base material configuring the layer B of the fire spread prevention material of the above-described embodiment.

FIG. 4(c) and FIG. 4(d) are views showing an example of the step (c). In the step (c), the laminate 36 is dried, whereby the aqueous solution-impregnated base material 33 in the laminate 36 is cured, and a fire spread prevention material 40 including a region 37 formed by the curing of the aqueous solution-impregnated base material 33 is obtained. In the step (c), the laminate 36 obtained in the step (b) may be dried as it is; however, as shown in FIG. 4(c) and FIG. 4(d), the laminate 36 is processed into a predetermined shape, and then the laminate (the laminate 36 after the processing) may be dried with the shape unchanged. According to this method, the processed shape is fixed by the curing of the aqueous solution-impregnated base material 33, and the fire spread prevention material 40 having the predetermined shape is obtained. A method for processing the laminate needs to be a method by which the laminate can be transformed and may be, for example, a method in which the laminate is compressed like pressing. The drying conditions of the laminate may be adjusted as appropriate from the viewpoint of increasing the hardness of the layer A.

According to the above-described method, since the aqueous solution-impregnated base material is cured in a state where the low-$SiO_2$ sodium silicate is in contact with the surfaces of the base materials, which becomes the layers B, (the first base material 34 and the second base material 35), the adhesion between the layer A and the layer B becomes strong. In addition, in this method, in the case of using an inorganic fiber sheet as the base material containing inorganic fibers and having a porous structure, it is also possible to form the layer A having the first region 21 and the second region 22 as shown in FIG. 3 by impregnating the inorganic fiber sheet with low-$SiO_2$ sodium silicate.

Hitherto, the fire spread prevention material of one embodiment of the present disclosure has been described, but the fire spread prevention material of the present disclosure is not limited to the above-described embodiment.

The present disclosure provides, as another embodiment, an assembled battery including two or more cells, a package accommodating the cells and the fire spread prevention material of the above-described embodiment disposed between the cells and/or between the cell and the package. This assembled battery is, for example, a lithium ion battery.

The present disclosure provides, as still another embodiment, an automobile including the assembled battery of the above-described embodiment.

The present disclosure provides, as far still another embodiment, a laminate having the same configuration as the fire spread prevention material of the above-described embodiment. The use of the laminate is not limited to fire spread prevention materials.

[Examples]

Hereinafter, the contents of the present disclosure will be described in more detail using examples and comparative example, but the present disclosure is not limited to the following examples.

<Materials used>

The following materials were prepared.

S1: Sodium silicate No. 1 (manufactured by Fuji Chemical Co., Ltd.) (solid content: 45 mass%, $SiO_2$/$Na_2O$ mole ratio = 2.1)
S2: Sodium silicate No. 2 (manufactured by Fuji Chemical Co., Ltd.) (solid content: 41 mass%, $SiO_2$/$Na_2O$ mole ratio = 2.5)
S3: Sodium silicate No. 3 (manufactured by Fuji Chemical Co., Ltd.) (solid content: 39 mass%, $SiO_2$/$Na_2O$ mole ratio = 3.2)

(Inorganic fibers)

F1: Alumina-silica fibers (average fiber diameter: 10 $\mu$m)
F2: Glass fibers (average fiber diameter: 10 $\mu$m)
F3: Silica fibers (average fiber diameter: 10 $\mu$m)
F4: Basalt fibers (average fiber diameter: 10 $\mu$m)

(Organic binders)

B1: Vinylon fibers (average fiber diameter: 5 $\mu$m)

B2: Acrylic resin
B3: Epoxy resin

(Inorganic particles)

P1: Silica particles (precipitated silica, average particle diameter: 15 $\mu$m, CARPLEX #80, manufactured by Evonik Industries AG)

P2: Aluminum hydroxide particles (average particle diameter: 1.0 $\mu$m, manufactured by FUJIFILM Wako Pure Chemical Corporation)

P3: Zinc oxide particles (average particle diameter: 1.0 $\mu$m, manufactured by FUJIFILM Wako Pure Chemical Corporation, special-grade reagent)

P4: Magnesium carbonate particles (average particle diameter: 1.0 $\mu$m, manufactured by FUJIFILM Wako Pure Chemical Corporation, special-grade reagent)

<Example 1>

(Fabrication of wet-formed sheet A)

6.5 Parts by mass of the alumina-silica fibers (F1) and 0.7 parts by mass of the vinylon fibers (B1) were added to 100 parts by mass of pure water and mixed with a homo-mixer manufactured by Tokushu Kika Kogyo Co., Ltd. for two hours to obtain a dispersion liquid. This dispersion liquid was formed into a papermaking screen, and the papermaking screen was dried with a Yankee dryer, thereby fabricating a wet-formed sheet A (non-woven fabric) having a thickness of 1 mm and a basis weight of 120 g/m$^2$.

(Fabrication of wet-formed sheet B)

Wet-formed sheets B (non-woven fabrics) were fabricated in the same manner as in the fabrication of the wet-formed sheet A.

(Fabrication of fire spread prevention material)

After the wet-formed sheet A was impregnated with the sodium silicate No. 1 (S1), the wet-formed sheets B were pasted to the upper and lower surfaces of the wet-formed sheet A to obtain a laminate. The obtained laminate was dried at 30°C, thereby obtaining a fire spread prevention material (total thickness: 3 mm) having a multilayer configuration in which a layer B (wet-formed sheet B), a layer A (layer formed by impregnating the wet-formed sheet A with sodium silicate) and a layer B (wet-formed sheet B) were laminated in this order. The content of the organic binder in the layer A, the content of the sodium silicate in the layer A and the content of the inorganic fibers in the layer B are shown in Table 1. The contents of the organic binders in the layers A, which are shown in tables in the present specification, are contents based on the total mass of the wet-formed sheet A, the contents of the sodium silicate in the layers A are contents based on the total mass of the layer A, and the contents of the inorganic fibers in the layers B are contents based on the total mass of the layer B.

(Evaluation)

The apparent density (weight reduction properties), thermal conductivity (heat insulating properties) and fire spread prevention properties of the fire spread prevention material and the expansion ratio of the layer A were evaluated by methods to be described below. The obtained results are shown in Table 1.

[Apparent density]

The apparent density was calculated from the dimensions and mass of a sample (fire spread prevention material).

[Thermal conductivity]

First, the fire spread prevention material was cut out to 200 mm $\times$ 200 mm and used as a measurement sample.

Next, the thermal conductivity of the measurement sample was measured at 23°C using a heat flow meter method thermal conductivity measuring instrument FOX-200 (manufactured by EKO Instruments Co., Ltd.) according to ISO 8301.

[Fire spread prevention properties]

The fire spread prevention material, a K thermocouple and an aluminum block (500 g) were laminated and disposed in this order on a hot plate (PA8015: manufactured by MSA-Factory Co., Ltd.) heated to 650°C. The rear surface temperature (the surface temperature on the opposite side to the hot plate) of the fire spread prevention material after 120 seconds had elapsed was measured and evaluated with the following standards. As the numerical value becomes larger, the fire spread prevention properties are evaluated as superior.

3: The rear surface temperature of the fire spread prevention material was 150°C or lower.
2: The rear surface temperature of the fire spread prevention material was higher than 150°C and 170°C or lower.
1: The rear surface temperature of the fire spread prevention material was higher than 170°C.

[Expansion ratio of layer A]

The thicknesses of the fire spread prevention material before and after the evaluation of the fire spread prevention properties were measured, and the expansion ratio in the thickness direction (lamination direction) was calculated based on the following formula.

$$\text{Formula: Expansion ratio (\%)} = (b - a)/a \times 100$$

[In the formula, a indicates the thickness of the layer A before the evaluation of the fire spread prevention properties, and b indicates the thickness of the layer A after the evaluation of the fire spread prevention properties.]

<Examples 2 to 4>

Fire spread prevention materials of Examples 2 to 4 shown in Table 1 were each fabricated in the same manner as in Example 1 except that the kind of the inorganic fibers was changed at the time of fabricating the wet-formed sheet A, and the apparent densities, thermal conductivities and fire spread prevention properties of the fire spread prevention materials and the expansion ratios of the layers A were evaluated in the same manner as in Example 1. The obtained results are shown in Table 1.

[Table 1]

| | | | Example 1 | Example 2 | Example 3 | Example 4 |
|---|---|---|---|---|---|---|
| Layer A | Inorganic fiber | | F1 | F2 | F3 | F4 |
| | Organic binder | Kind | B1 | B1 | B1 | B1 |
| | | Content (mass%) | 10 | 10 | 10 | 10 |
| | Sodium silicate | Kind | S1 | S1 | S1 | S1 |
| | | Content (mass%) | 90 | 90 | 90 | 90 |
| Layer B | Inorganic fiber | Kind | F1 | F1 | F1 | F1 |
| | | Content (mass%) | 90 | 90 | 90 | 90 |
| Total thickness (mm) | | | 3.0 | 3.0 | 3.0 | 3.0 |
| Apparent density (g/cm$^3$) | | | 0.6 | 0.6 | 0.5 | 0.6 |
| Thermal conductivity (W/mK) | | | 0.06 | 0.06 | 0.05 | 0.06 |

(continued)

|  |  | Example 1 | Example 2 | Example 3 | Example 4 |
|---|---|---|---|---|---|
| Fire spread prevention material | Evaluation result | 3 | 3 | 3 | 3 |
|  | Surface temperature (°C) | 108 | 114 | 112 | 119 |
| Expansion ratio | | 129% | 117% | 118% | 115% |

<Examples 5 to 7 and Comparative Examples 1 and 2>

Fire spread prevention materials of Examples 5 to 7 and Comparative Examples 1 and 2 shown in Table 2 were each fabricated in the same manner as in Example 1 except that the kind or amount of the organic binder used was changed at the time of fabricating the wet-formed sheet A, and the apparent densities, thermal conductivities and fire spread prevention properties of the fire spread prevention materials and the expansion ratios of the layers A were evaluated in the same manner as in Example 1. The obtained results are shown in Table 2.
[Table 2]

|  |  |  | Example 5 | Example 6 | Example 7 | Comparative Example 1 | Comparative Example 2 |
|---|---|---|---|---|---|---|---|
| Layer A | Inorganic fiber | | F1 | F1 | F1 | F1 | F1 |
|  | Organic binder | Kind | B1 | B2 | B3 | B1 | B1 |
|  |  | Content (mass%) | 5 | 10 | 10 | 3 | 30 |
|  | Sodium silicate | Kind | S1 | S1 | S1 | S1 | S1 |
|  |  | Content (mass%) | 90 | 90 | 90 | 90 | 90 |
| Layer B | Inorganic fiber | Kind | F1 | F1 | F1 | F1 | F1 |
|  |  | Content (mass%) | 90 | 90 | 90 | 90 | 90 |
| Total thickness (mm) | | | 3.0 | 3.0 | 3.0 | 3.0 | 3.0 |
| Apparent density (g/cm$^3$) | | | 0.6 | 0.6 | 0.6 | 0.6 | 0.6 |
| Thermal conductivity (W/mK) | | | 0.06 | 0.06 | 0.06 | 0.06 | 006 |
| Fire spread prevention material | Evaluation result | | 3 | 3 | 3 | 1 | 1 |
|  | Surface temperature (°C) | | 146 | 109 | 111 | 188 | 179 |
| Expansion ratio | | | 102% | 120% | 118% | 82% | 122% |

<Examples 8 and 9 and Comparative Example 3>

Fire spread prevention materials of Examples 8 and 9 and Comparative Example 3 shown in Table 3 were each fabricated in the same manner as in Example 1 except that the kind or amount of the sodium silicate aqueous solution (S1) used was changed at the time of fabricating the wet-formed sheet A, and the apparent densities, thermal conductivities and fire spread prevention properties of the fire spread prevention materials and the expansion ratios of the layers A were evaluated in the same manner as in Example 1. The obtained results are shown in Table 3.
[Table 3]

|  |  |  | Example 8 | Example 9 | Comparative Example 3 |
|---|---|---|---|---|---|
| Layer A | Inorganic fiber | | F1 | F1 | F1 |
| | Organic binder | Kind | B1 | B1 | B1 |
| | | Content (mass%) | 10 | 10 | 10 |
| | Sodium silicate | Kind | S1 | S2 | S3 |
| | | Content (mass%) | 60 | 90 | 90 |
| Layer B | Inorganic fiber | Kind | F1 | F1 | F1 |
| | | Content (mass%) | 90 | 90 | 90 |
| Total thickness (mm) | | | 3.0 | 3.0 | 3.0 |
| Apparent density (g/cm$^3$) | | | 0.6 | 0.6 | 0.6 |
| Thermal conductivity (W/mK) | | | 0.06 | 0.06 | 006 |
| Fire spread prevention material | Evaluation result | | 3 | 3 | 1 |
| | Surface temperature (°C) | | 147 | 138 | 192 |
| Expansion ratio | | | 104% | 109% | 88% |

<Examples 10 to 12>

Fire spread prevention materials of Examples 10 to 12 shown in Table 4 were each fabricated in the same manner as in Example 1 except that the kind of the inorganic fibers was changed at the time of fabricating the wet-formed sheet B, and the apparent densities, thermal conductivities and fire spread prevention properties of the fire spread prevention materials and the expansion ratios of the layers A were evaluated in the same manner as in Example 1. The obtained results are shown in Table 4.
[Table 4]

|  |  |  | Example 10 | Example 11 | Example 12 |
|---|---|---|---|---|---|
| Layer A | Inorganic fiber | | F1 | F1 | F1 |
| | Organic binder | Kind | B1 | B1 | B1 |
| | | Content (mass%) | 10 | 10 | 10 |
| | Sodium silicate | Kind | S1 | S1 | S1 |
| | | Content (mass%) | 90 | 90 | 90 |
| Layer B | Inorganic fiber | Kind | F2 | F3 | F4 |
| | | Content (mass%) | 90 | 90 | 90 |
| Total thickness (mm) | | | 3.0 | 3.0 | 3.0 |
| Apparent density (g/cm$^3$) | | | 0.6 | 0.6 | 0.6 |
| Thermal conductivity (W/mK) | | | 0.07 | 0.06 | 007 |
| Fire spread prevention material | Evaluation result | | 3 | 3 | 3 |
| | Surface temperature (°C) | | 121 | 120 | 136 |
| Expansion ratio | | | 115% | 115% | 107% |

<Example 13>

Sixteen parts by mass of the silica particles (P1) were added to 84 parts by mass of pure water and mixed with a mixer for two hours. 5.5 Parts by mass of cellulose microfibrils, 8.0 parts by mass of vinylon fibers (average fiber diameter: 5 μm) and a flocculant (manufactured by Mitsubishi Chemical Corporation, polyamide-based polymer, DI-AFLOC KP7000) were added to the obtained mixture, thereby obtaining a dispersion liquid. Sixteen parts by mass of the silica fibers (F3) were added as base material fibers to this dispersion liquid and then mixed with a mixer for one hour, thereby preparing a slurry. This slurry was formed into a papermaking screen, and the papermaking screen was dried with a Yankee dryer, thereby fabricating a wet-formed sheet C (non-woven fabric) having a thickness of 1 mm.

A fire spread prevention material of Example 13 shown in Table 5 was fabricated in the same manner as in Example 11 except that the layer B was formed using the wet-formed sheet C instead of the wet-formed sheet B, and the apparent density, thermal conductivity and fire spread prevention properties of the fire spread prevention material and the expansion ratio of the layer A were evaluated in the same manner as in Example 1. The obtained results are shown in Table 5. The contents of the inorganic particles in Table 5 are contents based on the total mass of the layer B.

<Examples 14 to 16>

Fire spread prevention materials of Examples 14 to 16 shown in Table 5 were each fabricated in the same manner as in Example 13 except that the kind of the inorganic particles was changed at the time of fabricating the wet-formed sheet C, and the apparent densities, thermal conductivities and fire spread prevention properties of the fire spread prevention materials and the expansion ratios of the layers A were evaluated in the same manner as in Example 1. The obtained results are shown in Table 5.

[Table 5]

| | | | Example 13 | Example 14 | Example 15 | Example 16 |
|---|---|---|---|---|---|---|
| Layer A | Inorganic fiber | | F1 | F1 | F1 | F1 |
| | Organic binder | Kind | B1 | B1 | B1 | B1 |
| | | Content (mass%) | 10 | 10 | 10 | 10 |
| | Sodium silicate | Kind | S1 | S1 | S1 | S1 |
| | | Content (mass%) | 90 | 90 | 90 | 90 |
| Layer B | Inorganic fiber | Kind | F3 | F3 | F3 | F3 |
| | | Content (mass%) | 30 | 30 | 30 | 30 |
| | Inorganic particles | Kind | P1 | P2 | P3 | P4 |
| | | Content (mass%) | 33 | 33 | 33 | 33 |
| Total thickness (mm) | | | 3.0 | 3.0 | 3.0 | 3.0 |
| Apparent density (g/cm³) | | | 0.7 | 0.9 | 0.9 | 0.9 |
| Thermal conductivity (W/mK) | | | 0.06 | 0.12 | 0.14 | 0.13 |
| Fire spread prevention material | Evaluation result | | 3 | 3 | 3 | 3 |
| | Surface temperature (°C) | | 119 | 111 | 133 | 121 |
| Expansion ratio | | | 120% | 120% | 120% | 120% |

<Example 17>

(Creation of fire spread prevention material)

After a laminate was obtained in the same manner as in Example 1, the laminate before drying was sandwiched between two L-shaped plastic plates having an angle of 90° (plastic plates having a shape formed by bending a rectangular plastic plate in an L shape), put into a state of being bent in an L shape, fixed in this state and pressurized from both sides of the plastic plates at 0.01 MPa for three seconds in an atmosphere of room temperature and a humidity of 50%. Next, the pressurized laminate was dried at 30°C immediately after the pressurization was released while remaining in the state of being sandwiched between the two plastic plates. As a result, a shape-processed fire spread prevention material (total thickness: 3 mm) was obtained. It was confirmed that the obtained fire spread prevention material had a transformation angle of 60° or more and had neither layer separation nor layer fracture. In addition, the three-point bending strength of the laminate before drying was 0.2 MPa, and the three-point strength of the fire spread prevention material was 1.0 MPa. In addition, the apparent density, thermal conductivity and fire spread prevention properties of the fire spread prevention material and the expansion ratio of the layer A were evaluated in the same manner as in Example 1. The results are shown in Table 6. In the examples of the present specification, the three-point strength was measured according to JIS K 7171.

<Example 18>

A wet-formed sheet A was fabricated in the same manner as in Example 2. In addition, a wet-formed sheet B was fabricated in the same manner as in the fabrication of the wet-formed sheet A. Next, a shape-processed fire spread prevention material (total thickness: 3 mm) was obtained in the same manner as in Example 17 except that the obtained wet-formed sheet A and wet-formed sheet B were used. It was confirmed that the obtained fire spread prevention material had a transformation angle of 60° or more and had neither layer separation nor layer fracture. In addition, the three-point bending strength of the laminate before drying was 0.3 MPa, and the three-point strength of the fire spread prevention material was 1.5 MPa. In addition, the apparent density, thermal conductivity and fire spread prevention properties of the fire spread prevention material and the expansion ratio of the layer A were evaluated in the same manner as in Example 1. The results are shown in Table 6.

<Example 19>

A wet-formed sheet A was fabricated in the same manner as in Example 3. In addition, a wet-formed sheet B was fabricated in the same manner as in the fabrication of the wet-formed sheet A. Next, a shape-processed fire spread prevention material (total thickness: 3 mm) was obtained in the same manner as in Example 17 except that the obtained wet-formed sheet A and wet-formed sheet B were used. It was confirmed that the obtained fire spread prevention material had a transformation angle of 60° or more and had neither layer separation nor layer fracture. In addition, the three-point bending strength of the laminate before drying was 0.3 MPa, and the three-point strength of the fire spread prevention material was 1.3 MPa. In addition, the apparent density, thermal conductivity and fire spread prevention properties of the fire spread prevention material and the expansion ratio of the layer A were evaluated in the same manner as in Example 1. The results are shown in Table 6.
[Table 6]

| | | | Example 17 | Example 18 | Example 19 |
|---|---|---|---|---|---|
| Layer A | Inorganic fiber | | F1 | F2 | F3 |
| | Organic binder | Kind | B1 | B1 | B1 |
| | | Content (mass%) | 10 | 10 | 10 |
| | Sodium silicate | Kind | S1 | S1 | S1 |
| | | Content (mass%) | 90 | 90 | 90 |
| Layer B | Inorganic fiber | Kind | F1 | F2 | F3 |
| | | Content (mass%) | 90 | 90 | 90 |
| Total thickness (mm) | | | 3.0 | 3.0 | 3.0 |
| Apparent density (g/cm$^3$) | | | 0.6 | 0.6 | 0.5 |
| Thermal conductivity (W/mK) | | | 0.06 | 0.07 | 005 |
| Fire spread prevention material | Evaluation result | | 3 | 3 | 3 |
| | Surface temperature (°C) | | 108 | 119 | 117 |
| Expansion ratio | | | 129% | 111% | 113% |

**Explanation of References**

1, 23, 31: Inorganic fiber base material, 2, 24: Low-SiO$_2$ sodium silicate, 10, 40: Fire spread prevention material, 11: First layer (layer B), 12: Second layer (layer A), 13: Third layer (layer B), 20: Inorganic particle, 21: First region, 22: Second region, 25: Inorganic fiber sheet, 32: Aqueous solution containing low-$SiO_2$ sodium silicate, 36: Laminate.

**Claims**

1. A fire spread prevention material having a multilayer configuration, comprising at least:

   a layer A comprising an inorganic fiber base material and sodium silicate impregnated into the inorganic fiber base material; and
   a layer B comprising an inorganic fiber and having a porous structure,
   wherein the inorganic fiber base material comprises an inorganic fiber and an organic binder,
   a content of the organic binder is 5 to 20 mass% based on a total mass of the inorganic fiber base material, and
   a $SiO_2/Na_2O$ mole ratio of the sodium silicate is less than 3.1.

2. The fire spread prevention material according to Claim 1,
   wherein a three-point bending strength that is measured according to JIS K 7171 is 0.5 MPa or higher.

3. The fire spread prevention material according to Claim 1 or 2,
   wherein, when the fire spread prevention material has been heated at 650°C for 120 seconds from one end in a lamination direction, a surface temperature of the fire spread prevention material at the other end is 150°C or lower.

4. The fire spread prevention material according to Claim 1 or 2,
   wherein, when the fire spread prevention material has been heated at 650°C for 120 seconds from one end in a lamination direction, an expansion ratio of the layer A in the lamination direction is 90% or more.

5. The fire spread prevention material according to Claim 1 or 2,
   wherein a total thickness is 5.0 mm or less, and an apparent density is 1.0 g/cm$^3$ or less.

6. The fire spread prevention material according to Claim 1 or 2,
   wherein a content of the sodium silicate is 60 mass% or more based on a total mass of the layer A.

7. The fire spread prevention material according to Claim 1 or 2,
   wherein a thickness of the layer A is 0.2 to 3.0 mm.

8. The fire spread prevention material according to Claim 1 or 2,
   wherein the inorganic fiber base material is made of a wet-formed sheet comprising an inorganic fiber and an organic binder.

9. The fire spread prevention material according to Claim 1 or 2,
   wherein the organic binder comprises at least one resin selected from the group consisting of an acrylic resin, a polyvinyl alcohol-based resin and an epoxy resin.

10. The fire spread prevention material according to Claim 1 or 2,
    wherein the inorganic fiber comprised in the layer B comprises at least one compound selected from the group consisting of silica and alumina.

11. The fire spread prevention material according to Claim 1 or 2,
    wherein the layer B further comprises an inorganic particle.

12. The fire spread prevention material according to Claim 1 or 2,
    wherein a total amount of the inorganic fiber and the inorganic particle comprised in the layer B is 40 to 95 mass% based on a total mass of the layer B.

13. The fire spread prevention material according to Claim 1 or 2,

    wherein the fire spread prevention material has a multilayer configuration in which a first layer, a second layer and a third layer are arranged in this order,

the first layer and the third layer are the layer B, and
the second layer is the layer A.

14. The fire spread prevention material according to Claim 1 or 2, which is processed into a predetermined shape.

15. The fire spread prevention material according to Claim 1 or 2, which is used in an assembled battery comprising two or more cells and a package accommodating the cells, by being disposed between the cells and/or between the cell and the package.

16. A method for producing a fire spread prevention material comprising:

a step (a) of impregnating an inorganic fiber base material with an aqueous solution comprising sodium silicate having a $SiO_2/Na_2O$ mole ratio of less than 3.1;
a step (b) of disposing a base material comprising an inorganic fiber and having a porous structure on the inorganic fiber base material impregnated with the aqueous solution to obtain a laminate comprising the aqueous solution; and
a step (c) of drying the laminate,
wherein the inorganic fiber base material comprises an inorganic fiber and an organic binder, and
a content of the organic binder is 5 to 20 mass% based on a total mass of the inorganic fiber base material.

17. The method for producing a fire spread prevention material according to Claim 16,
wherein, in the step (c), the laminate is processed into a predetermined shape, and then the laminate is dried with the shape unchanged.

18. An assembled battery comprising:

two or more cells;
a package accommodating the cells; and
the fire spread prevention material according to Claim 1 or 2 disposed between the cells and/or between the cell and the package.

19. An automobile comprising:
the assembled battery according to Claim 18.

20. A laminate comprising at least:

a layer A comprising an inorganic fiber base material and sodium silicate impregnated into the inorganic fiber base material; and
a layer B comprising an inorganic fiber and having a porous structure,
wherein the inorganic fiber base material comprises an inorganic fiber and an organic binder,
a content of the organic binder is 5 to 20 mass% based on a total mass of the inorganic fiber base material, and
a $SiO_2/Na_2O$ mole ratio of the sodium silicate is less than 3.1.

## Fig.1

**Fig.2**

**Fig.3**

*Fig.4*

(a)

31

32

(b)

36

35

33

34

(c)

35

33

34

(d)

40

35

37

34

<table>
<tr><td colspan="2">**INTERNATIONAL SEARCH REPORT**</td><td colspan="2">International application No.<br>**PCT/JP2022/023819**</td></tr>
</table>

**A. CLASSIFICATION OF SUBJECT MATTER**

***B32B 5/02***(2006.01)i; ***B32B 5/18***(2006.01)i; ***B32B 5/26***(2006.01)i; ***B32B 5/28***(2006.01)i; ***D04H 1/413***(2012.01)i; ***D04H 1/4209***(2012.01)i; ***H01M 10/625***(2014.01)i; ***H01M 10/6555***(2014.01)i; ***H01M 10/658***(2014.01)i; ***H01M 50/204***(2021.01)i; ***H01M 50/249***(2021.01)i; ***H01M 50/293***(2021.01)i

FI: B32B5/02 B; B32B5/26; B32B5/18; D04H1/4209; D04H1/413; H01M10/658; H01M10/625; H01M10/6555; H01M50/293; H01M50/249; H01M50/204 401E; B32B5/28 A; H01M50/204 401F

According to International Patent Classification (IPC) or to both national classification and IPC

**B. FIELDS SEARCHED**

Minimum documentation searched (classification system followed by classification symbols)

B32B1/00-43/00; D04H1/00-18/04; H01M10/52-10/667

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 52-095538 A (HONSHU PAPER CO., LTD.) 11 August 1977 (1977-08-11)<br>page 10, upper right column, lines 5-9, examples | 1-3, 5, 7-20 |
| A | | 4, 6 |
| Y | JP 2010-228960 A (AICA KOGYO CO., LTD.) 14 October 2010 (2010-10-14)<br>claims, paragraph [0007], examples | 1-3, 5, 7-20 |
| A | | 4, 6 |
| Y | WO 2020/204209 A1 (DENKA CO., LTD.) 08 October 2020 (2020-10-08)<br>paragraphs [0003], [0044]-[0048], [0065]-[0068], fig. 1, 2 | 1-3, 5, 7-20 |
| A | | 4, 6 |
| A | JP 2021-074646 A (NAGASE & CO., LTD.) 20 May 2021 (2021-05-20)<br>entire text, all drawings | 1-20 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **27 July 2022** | **09 August 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/023819**

| Patent document cited in search report | | | Publication date (day/month/year) | Patent family member(s) | Publication date (day/month/year) |
|---|---|---|---|---|---|
| JP | 52-095538 | A | 11 August 1977 | US 4069859 A column 12, lines 23-28, examples | |
| JP | 2010-228960 | A | 14 October 2010 | (Family: none) | |
| WO | 2020/204209 | A1 | 08 October 2020 | (Family: none) | |
| JP | 2021-074646 | A | 20 May 2021 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010053196 A
- JP 4958409 B